(19) Europäisches Patentamt
European Patent Office
Office européen des brevets

(11) **EP 3 157 996 B1**

(12) **EUROPEAN PATENT SPECIFICATION**

(45) Date of publication and mention of the grant of the patent:
**12.02.2020 Bulletin 2020/07**

(21) Application number: **15733041.6**

(22) Date of filing: **17.06.2015**

(51) Int Cl.:
***C08L 23/00*** *(2006.01)*

(86) International application number:
**PCT/US2015/036157**

(87) International publication number:
**WO 2015/195750 (23.12.2015 Gazette 2015/51)**

(54) **ACRYLIC BEADS FOR ENHANCING THERMICITY OF GREENHOUSE FILMS**

ACRYLKÜGELCHEN ZUR ERHÖHUNG DER THERMIZITÄT VON GEWÄCHSHAUSFOLIEN

BILLES ACRYLIQUES POUR L'AMÉLIORATION DE LA THERMICITÉ DE FILMS À EFFET DE SERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2014 US 201462014454 P**

(43) Date of publication of application:
**26.04.2017 Bulletin 2017/17**

(73) Proprietors:
• **Dow Global Technologies LLC**
**Midland, MI 48674 (US)**
• **Rohm and Haas Company**
**Philadelphia, PA 19106 (US)**

(72) Inventors:
• **LAFLEUR, Edward E.**
**Collegeville, PA 19426 (US)**
• **WILLIAMSON, Alexander**
**Freeport, TX 77541 (US)**
• **SUNDARAM, Sekhar**
**Freeport, TX 77541 (US)**
• **PARADKAR, Rajesh P.**
**Freeport, TX 77541 (US)**
• **RAY, Himal**
**Collegeville, PA 19426 (US)**

(74) Representative: **Boult Wade Tennant LLP**
**Salisbury Square House**
**8 Salisbury Square**
**London EC4Y 8AP (GB)**

(56) References cited:
**JP-A- 2001 055 451    US-A1- 2012 071 602**

**Description**

**Field of Invention**

This invention relates to greenhouse films made from polymeric compositions.

**Background of the Invention**

This invention relates to greenhouse films with enhanced thermicity. Thermicity is the ability of the film to absorb infrared (IR) energy radiated from the floor of the greenhouse, and re-radiate it back into the interior of the greenhouse. This property is particularly useful at night when there is no heat input from the sun, resulting in important savings in heating costs.

The current greenhouse film technology ranges from mechanical embossing to blends of inorganic particles with polyolefin resins. Also copolymers of polyolefin monomers can be coextruded with polyolefin homopolymers to form multilayer films. Another example is plastic sheet with light scattering objects dispersed within such as glass particles, titanium dioxide particles, transparent calcium carbonate particles, and transparent polymer particles. A significant number of modifications are currently in practice on this type of light scattering and light management film. The main disadvantage of these technologies is reduction of light transmission due to dirt pick up, light absorption and attenuation due to excessive scattering. In addition to the sacrifice of optical transmission, there is also the concomitant loss of mechanical integrity, which is manifested by the inclusion of inorganic fillers in the plastic matrix. One example of a modification is to prepare films from ethylene vinyl acetate (EVA) copolymers. However, these films are susceptible to ester hydrolysis, which results in hydrolytic instability.

Therefore, a greenhouse film with enhanced thermicity which overcomes the above disadvantages would be desirable.

**Summary of the Invention**

This invention provides greenhouse films made from polymeric compositions.

The instant invention provides a greenhouse film comprising a polymeric composition comprising a) 50 to 99 percent by weight of a continuous polymeric phase comprising a polymer selected from the group consisting of a polyolefin, a polyolefin copolymer, an ethylene propylene copolymer with an acrylic ester, an ethylene or propylene copolymer with a vinyl acetate, and combinations thereof; and b) 1 to 50 percent by weight of polymeric particles having an average particle diameter of 0.5 to 10 $\mu$m; a refractive index from 1.474 to 1.545; an average particle hardness from 1.2367E+10 N/m$^2$ to 8.4617E+10 N/m$^2$; and at least 60% polymerized acrylic monomer units.

In another alternative embodiment, the instant invention further provides a greenhouse film having at least one layer which comprises the polymeric composition.

In an alternative embodiment, the instant invention provides a greenhouse film, in accordance with any of the preceding embodiments, except that the greenhouse film is characterized by having a thickness in the range of from 25 to 300 $\mu$m, haze in the range of from 50 to 99%, transmittance in the range of from 85 to 99%, and thermicity in the range of from 60 to 10%.

**Brief Description of the Figures**

Figure 1 depicts the intensity of scattered light through films as a function of detector angle.
Figure 2 depicts IR spectra of films with and without acrylic beads.
Figure 3 is a plot of film thickness vs. thermicity.

**Detailed Description of the Invention**

The instant invention provides greenhouse films made from polymeric compositions. The polymeric composition suitable for greenhouse film applications comprises 50 to 99 percent by weight of a continuous polymeric phase comprising a polymer selected from the group consisting of a polyolefin, a polyolefin copolymer, an ethylene or propylene copolymer with an acrylic ester, an ethylene or propylene copolymer with a vinyl acetate, and combinations thereof and 1 to 50 percent by weight of polymeric particles having an average particle diameter of 0.5 to 10 $\mu$m; a refractive index from 1.474 to 1.545; an average particle hardness from 1.2367E+10 N/m$^2$ to 8.4617E+10 N/m$^2$; and at least 60% polymerized acrylic monomer units.

## Continuous Polymeric Phase

In various embodiments, the continuous polymeric phase is a thermoplastic polymeric matrix material. Examples of polymers in the continuous polymeric phase include, but are not limited to polyolefins, polyolefin copolymers, ethylene copolymers with acrylic esters, propylene copolymers with acrylic esters, ethylene copolymers with vinyl acetates, propylene copolymers with vinyl acetates, and combinations thereof. In various embodiments, the thermoplastic polymeric matrix material comprises polyolefins. Polyolefins include polymers or copolymers of alkenes, those having from two to ten carbon atoms in various embodiments, two to eight carbon atoms in various other embodiments, and two to four carbon atoms in various other embodiments. Examples of polyolefins suitable for use in the base layer include, but are not limited to polypropylene, polyethylene, polybutylene, and copolymers and blends thereof. The weight-average molecular weight of the polyolefin used in this invention is from 20,000 to 500,000 in various embodiments, and is from 50,000 to 300,000 in various other embodiments.

Polyolefin homo and copolymers can also be used. Examples include, but are not limited to the following: polypropylene and polyethylene homo and copolymers containing from 0 to 40 weight percent (wt %) ethylene, propylene, butene, octene and/or hexene.

Commercial grades include but are not limited to VERSIFY™ plastomers, DOWLEX™, ENGAGE™, AFFINITY™, INFUSE™ and LDPE resins, available from The Dow Chemical Company.

Optionally, the continuous polymeric phase may comprise compatible or incompatible blends of polyolefins with other (co)polymers, or may contain inorganic fillers, or additives such as slip aids, anti-block, and anti-oxidants.

The continuous polymeric phase is present in the polymeric composition in the range of from 50 to 99 percent by weight. All individual values and subranges between 50 and 99 percent by weight are included herein and disclosed herein; for example, the continuous polymeric phase can be present in the polymeric composition in the range of from 51 and 83 percent by weight, from 60 to 80 percent by weight, from 65 to 99 percent by weight, from 70 to 85 percent by weight, and from 72 to 98 percent by weight.

## Polymeric particles

Polymeric particles comprise organic polymers, preferably addition polymers, and preferably are substantially spherical. Average particle diameter is determined as the arithmetic mean particle diameter. In various embodiments, the polymeric particles have an average particle diameter no less than 0.5 $\mu$m. All individual values and subranges of 0.5 $\mu$m and higher are included herein and disclosed herein; for example, the polymeric particles can have an average particle diameter of at least 0.7 $\mu$m, at least 0.9, at least 1 $\mu$m, at least 1.5 $\mu$m, at least 2 $\mu$m, at least 2.5 $\mu$m, at least 3 $\mu$m, or at least 3.5 $\mu$m. In various embodiments, these particles have an average particle diameter no greater than 15 $\mu$m. All individual values and subranges of 15 $\mu$m and less are included herein and disclosed herein; for example, the particles can have an average particle diameter of no greater than 10 $\mu$m, no greater than 8 $\mu$m, no greater than 6 $\mu$m, or no greater than 5.5 $\mu$m. In various embodiments, the polymeric particles have a particle size distribution indicating a single mode; the width of the particle size distribution at half-height is from 0.1 to 3 $\mu$m in various embodiments, and is from 0.2 to 1.5 $\mu$m in various other embodiments. The film may contain particles having different average diameters provided that particles of each average diameter have a particle size distribution as described immediately above. The particle size distribution is determined using a particle size analyzer.

Refractive index (RI) values are determined at the sodium D line, where $\lambda$ = 589.29 nm at 20 °C, unless specified otherwise. Generally, the refractive index of the polymeric particle is from 1.474 to 1.545. All individual values and subranges from 1.474 to 1.545 are included herein and disclosed herein; for example, the refractive index is from 1.49 to 1.53, from 1.50 to 1.53, or from 1.52 to 1.545. Generally, the refractive index of the continuous polymeric phase is from 1.4 to 1.6. All individual values and subranges from 1.4 to 1.6 are included herein and disclosed herein; for example the refractive index of the continuous polymeric phase is from 1.45 to 1.55, from 1.47 to 1.53, or from 1.48 to 1.52. Generally, the refractive index of the polymeric particle is greater than the refractive index of the continuous polymeric phase in the infrared region, i.e., from 800-2500 nm.

Refractive index differences stated herein are absolute values. Generally, the refractive index difference (i.e., the absolute value of the difference) measured from 800 nm to 2500 nm between the polymeric particle and the continuous polymeric phase is at least 0.06. All individual values and subranges of 0.06 and greater are included herein and disclosed herein; for example, the refractive difference is at least 0.08, at least 0.09, or at least 0.1. Generally, the refractive index difference measured from 800 nm to 2500 nm between the polymeric particle and the continuous polymeric phase is no greater than 0.2. All individual values and subranges of 0.2 and less are included herein and disclosed herein; for example, the refractive index difference is no greater than 0.17, or is no greater than 0.15. Generally, the refractive index difference measured from 400 nm to 800 nm between the polymeric particle and the continuous polymeric phase is at least 0.04. All individual values and subranges of 0.04 and greater are included herein and disclosed herein; for example, the refractive index difference is at least 0.05, at least 0.06, at least 0.07, or at least 0.08. Generally, the refractive index difference measured from 400 nm to 800 nm between the polymeric particle and the continuous polymeric phase is no greater than 0.2, is no greater than 0.15 in various other embodiments, and is no greater than 0.1 in various other embodiments.

In various embodiments, the polymeric particles in the polymeric composition are those having a continuous refractive index gradient ("GRIN" particle, see, e.g., US 2009/0097123). GRIN particles have a refractive index which increases continuously from the center of the particles to the surface. Generally, GRIN particles have a refractive index at the surface from 1.46 to 1.7. All individual values and subranges between 1.46 and 1.7 are included herein and disclosed herein; for example, the refractive index at the surface is from 1.52 to 1.68, from 1.53 to 1.65, or from 1.54 to 1.6. Generally, GRIN particles have a refractive index at the center from 1.46 to 1.7. All individual values and subranges between 1.46 and 1.7 are included herein and disclosed herein, for example, the refractive index at the center is from 1.46 to 1.52, or 1.47 to 1.51, or 1.55 to 1.6, or 1.6 to 1.7.

The micro GRIN lens reduce the loss of light and minimize spherical and chromatic aberration. Because the refractive index of the GRIN sphere lens varies continuously within the lens media, a unique focus is defined by light rays that transmit through the lens. A consequence of this is the observation that light rays are bent with the change in refractive index. The bending of the light rays results in the elimination of light loss through total internal reflection, and the creation of a well defined focal point and focal length, unique to the spherical lens geometry.

The GRIN polymer particles are spherical in geometry and possess unique morphology. There are two well defined cases of GRIN polymer particles: In the less familiar case, which is described as case I, the refractive index of the spherical particle decreases continuously from the surface of the particle to its central core. In the more well known second type of GRIN polymer particle, case II; the refractive index of the particle increases continuously from the outer spherical surface of the particle to the inner core. These lens-like polymer particles enhance the refraction of light rays incident upon the polymeric matrix in which these particles are coated or dispersed. The overall effect of high gain in optical intensity, from enhanced light refraction, is a reduction in loss of incident light rays to reflection and diffraction. Consequently, the particles enhance light diffusion, in case I; and transmission with low loss of photons to total internal reflection, in case II.

GRIN particles may have a core derived from a polymer seed used to produce the GRIN particle. Generally, the core of the GRIN particle is no more than 95 wt% of the particle, is no more than 80 wt% in various other embodiments, is no more than 60 wt% in various other embodiments, is no more than 40 wt% in various other embodiments, and is no more than 20 wt% in various other embodiments. The refractive index of a GRIN particle for purposes of calculating a refractive index difference is the refractive index at the particle surface. The refractive index can vary from high in the core to low on the surface of the particle and low in the core and high on the surface of the particle. Hence the center of the particle can have refractive index of 1.61 and surface of 1.40.

The variation in refractive index is measured by the Mach-Zehnder Interference Microscope. The measuring technique, defined as the shearing interference method, is centered around the determination of the optical path difference. The path difference is understood to be the difference between two optical path lengths which are caused by differences in the refractive index and or thickness. The interference-microscopic path difference is the difference between the optical path length in an object and that in its surroundings. The optical path length S is the product of the distance d traversed by the light rays and the refractive index n of the medium that the light rays pass through.

After synthetic preparation, the spheres are evaluated for optical properties (refractive index profile by path difference) by first immersion in a refractive index matching fluid which has refractive index ($N_d$ = 1.54) at 25°C. The total magnification is approximately 110. The interference or fringe patterns are taken by a CCD camera in which the pixels were estimated, after calibration with a microscope scale bar, to be about 100 nm in the object plane.

The polymeric particles can contain acrylic monomers. Acrylic monomers include acrylic acid (AA), methacrylic acid (MAA), esters of AA and MAA, itaconic acid (IA), crotonic acid (CA), acrylamide (AM), methacrylamide (MAM), and derivatives of AM and MAM, e.g., alkyl (meth)acrylamides. Esters of AA and MAA include, but are not limited to, alkyl, hydroxyalkyl, phosphoalkyl and sulfoalkyl esters, e.g., methyl methacrylate (MMA), ethyl methacrylate (EMA), butyl methacrylate (BMA), hydroxyethyl methacrylate (HEMA), hydroxyethyl acrylate (HEA), hydroxypropyl methacrylate (HPMA), hydroxybutyl acrylate (HBA), methyl acrylate (MA), ethyl acrylate (EA), butyl acrylate (BA), 2-ethylhexyl acrylate (EHA), cyclohexyl methacrylate (CHMA), benzyl acrylate (BzA) and phosphoalkyl methacrylates (e.g., PEM). Generally, the polymeric particles comprise at least 60 mole percent (mole %) of acrylic monomer units. All individual values and subranges of 60 mole % and greater are included herein and disclosed herein; for example, the polymeric particles can include at least 65 mole % of acrylic monomer units, at least 70 mole % of acrylic monomer units, at least 75 mole % of acrylic monomer units, or at least 80 mole % of acrylic monomer units. The polymeric particles can also include styrenic monomers which can include styrene, $\alpha$-methylstyrene; 2-, 3-, or 4-alkylstyrenes, including methyl- and ethylstyrenes. In an embodiment, the styrenic monomer is styrene.

Generally, the polymeric particles comprise at least 70 mole % of acrylic and styrenic monomer units. All individual values and subranges of 70 mole % and greater are included herein and disclosed herein; for example, the polymeric particles comprise at least 80 mole % of acrylic and styrenic monomer units, at least 90 mole % of acrylic and styrenic monomer units, at least 95 mole % of acrylic and styrenic monomer units, or at least 97 mole % of acrylic and styrenic monomer units. Generally, the polymeric particle also comprises from 0 to 5 mole % of acid monomer units (e.g., acrylic acid (AA), methacrylic acid (MAA), itaconic acid (IA), crotonic acid (CA), or from 0.5 to 4% AA and/or MAA, and may also contain small amounts of residues of vinyl monomers.

In various embodiments, the polymeric particles are crosslinked. Crosslinking prevents the particles from melting at film extrusion temperatures. Crosslinked polymeric particles contain crosslinkers. Crosslinkers are monomers having two or more ethylenically unsaturated groups, or coupling agents (e.g., silanes) or ionic crosslinkers (e.g., metal oxides). Crosslinkers having two or more ethylenically unsaturated groups may include, e.g., divinylaromatic compounds, di-, tri- and tetra-acrylate or methacrylate esters, di-, tri- and tetra-allyl ether or ester compounds and allyl acrylate or allyl methacrylate. Examples of such monomers include divinylbenzene (DVB), trimethylolpropane diallyl ether, tetraallyl pentaerythritol, triallyl pentaerythritol, diallyl pentaerythritol, diallyl phthalate, diallyl maleate, triallyl cyanurate, Bisphenol A diallyl ether, allyl sucroses, methylene bisacrylamide, trimethylolpropane triacrylate, allyl methacrylate (ALMA), ethylene glycol dimethacrylate (EGDMA), hexane-1,6-diol diacrylate (HDDA) and butylene glycol dimethacrylate (BGDMA). Generally, the amount of polymerized crosslinker residue in the polymeric particle is no more than 10%. All individual values and subranges of 10% or less are included herein and disclosed herein; for example, the polymerized crosslinker residue in the polymeric particles is no more than 9%, no more than 8%, no more than 7%, or no more than 6%. Generally, the amount of polymerized crosslinker residue in the polymeric particle is at least 0.1%. All individual values and subranges of 0.1% or greater are included herein and disclosed herein; for example, the amount of polymerized crosslinker residue in the polymeric particle is at least 0.5%, at least 1%, at least 2%, or at least 3%. Generally, if crosslinkers are present, they have a molecular weight from 100 to 250. All individual values and subranges from 100 to 250 are included herein and disclosed herein; for example, the crosslinkers can have a molecular weight from 110 to 230, from 110 to 200, or from 115 to 160. Generally, crosslinkers are difunctional or trifunctional, i.e., they are diethylenically or triethylenically unsaturated, respectively. In various embodiments, the surface of the acrylic particles can be chemically functionalized during the second stage polymerization with (a) 3-(Trimethoxysilyl) propyl methacrylate (MATS), or (b) Vinyl Trimethoxy Silane (VTMS), and (c) Acetoacetoxy Ethyl Methacrylate (AAEM). Each of these monomers can serve as coupling agents to the polyolefin matrix which forms the continuous phase of the green house film.

In an alternate embodiment, a siloxane coupling agent from 0.1% to 10% by weight, preferably 3% to 7%, based on the dry weight of the polymeric particle, is added to the polymeric polymer. By "aminosilane" herein is meant a non-polymeric organofunctional alkoxysilane molecule bearing at least one primary or secondary amino group such as, for example, (3-aminopropyl)-triethoxysilane [CAS# 919-30-2], (3-aminopropyl)-diethoxy-methylsilane, (3-aminopropyl)-dimethyl-ethoxysilane, (3-aminopropyl)-trimethoxysilane [CAS# 13822-56-5], and N-beta-(aminoethyl)-gamma-aminopropyltrimethoxysilane. The siloxane coupling agent is added to the polymeric particles after preparation but prior to spray drying.

The polymeric particles are generally prepared in an aqueous medium by known emulsion polymerization techniques, followed by spray drying of the resulting polymer latex. Spray drying typically results in clumps of polymeric particles having an average diameter of 0.5 to 15 $\mu$m.

The polymeric particles are generally present in a range of 1 weight (wt) % to 50 wt %. All individual values and ranges from 1 wt % to 50 wt % are included herein and disclosed herein; for example, the polymeric particles can be present in the skin layer in a range of 1 wt % to 46 wt %, 1 wt % to 37 wt %, 2 wt % to 37 wt %, 3 wt % to 50 wt %, and 4 wt % to 50 wt %.

## Optional Components

The polymeric composition may further include optionally one or more pigments. The polymeric composition may comprise 0 to 10 percent by weight of one or more pigments. All individual values and subranges from 0 to 10 weight percent are included herein and disclosed herein; for example, the weight percent of pigments can be from a lower limit of 0.1, 0.2, 0.3, 0.5, 1, 2, 3, 4, or 5 weight percent to an upper limit of 1, 2, 3, 4, 5, 6, 7, 8, 9, or 10 weight percent. For example, polymeric composition may comprise 0 to 9 percent by weight of one or more pigments; or in the alternative, polymeric composition may comprise 0.1 to 8 percent by weight of one or more pigments; or in the alternative, polymeric composition may comprise 0.1 to 7 percent by weight of one or more pigments; or in the alternative, polymeric composition may comprise 0.1 to 6 percent by weight of one or more pigments. Such pigments include, but are not limited to, calcium carbonate and titanium dioxide, which is commercially available under the tradename Ti-Pure™ from the DuPont, Wilmington, DE, USA. Mixtures of any two or more pigments can also be used.

## End Use Applications

The polymeric composition according to the present invention are formed into a greenhouse film. The inventive polymeric composition may be formed into a film via, for example, a film casting, or blown-film process. In one embodiment, the polymeric composition is formed into a single layer film via a film casting or blown-film process. In another embodiment, the polymeric composition may be formed into a multi-layer film structure. In another embodiment, the polymeric composition may be formed into a single layer or a multi-layer greenhouse film structure associated with one or more substrates, wherein at least one layer of the greenhouse film comprises the polymeric composition.

The greenhouse films according to the present invention have a thickness in the range of from 25 $\mu$m to 300 $\mu$m, for example from 75 $\mu$m to 275 $\mu$m. The greenhouse films according to the present invention have a haze in the range of from 50 to 99%, for example from 52 to 97%, 56 to 93%, 62 to 85%, or 66 to 79%. The greenhouse films according to the present invention have transmittance in the range of 85 to 99%, for example, from 87 to 97%. The greenhouse films have thermicity in the range of from 60% to 10%, for example from 58 to 15%.

## Examples

Acrylic beads (EXL-5136, 5 microns diameter, 10 weight %) were compounded into Dowlex 2045G using a Micro-18 twin screw extruder. The resultant concentrate was used to cast mono-layer films of different thicknesses using a Collin cast film line. Reference films without beads were also produced. The formulations and thicknesses are shown in Table 1, below.

### Table 1. Formulations and Thicknesses of Film Samples

| Film | Formulation | Thickness (microns) |
|---|---|---|
| Comparative Example A | Dowlex 2045G | 50 |
| Comparative Example B | Dowlex 2045G | 100 |
| Comparative Example C | Dowlex 2045G | 150 |
| Example 1 | 90% Dowlex 2045G/ 10% EXL-5136 | 50 |
| Example 2 | 90% Dowlex 2045G/ 10% EXL-5136 | 100 |
| Example 3 | 90% Dowlex 2045G/ 10% EXL-5136 | 150 |

The films were tested for haze, transmittance, and thermicity. The results are shown in Table 2, below.

### Table 2. Haze and Transmittance Measurements

| Film | Transmittance (%) | sd | Haze (%) | sd | Thermicity (%) |
|---|---|---|---|---|---|
| Comparative Example A | 93.3 | 0.06 | 2.46 | 0.17 | 80.9 |
| Comparative Example B | 93.1 | 0.06 | 3.44 | 0.12 | 70.5 |
| Comparative Example C | 92.9 | 0.06 | 8.38 | 0.26 | 66.2 |
| Example 1 | 92 | 0.06 | 61.9 | 0.68 | 56.5 |
| Example 2 | 91.7 | 0.06 | 80.7 | 0.17 | 42.5 |
| Example 3 | 91.8 | 0 | 89.5 | 0.45 | 34.0 |

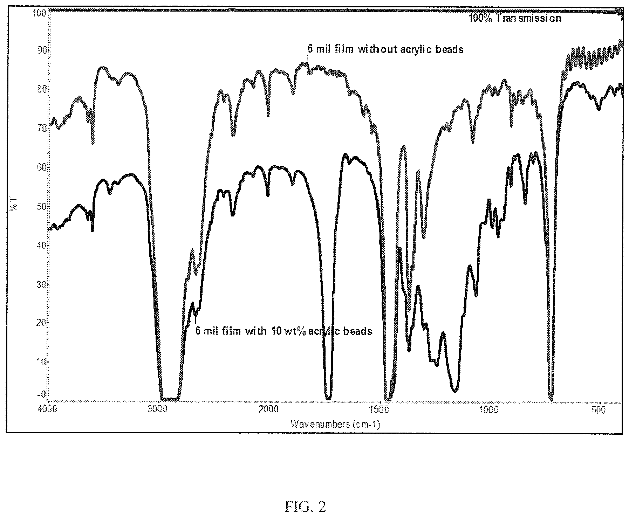

In order to show the dependency of thermicity on film thickness, these results are also depicted in Figure 2, which is a plot of film thickness vs. thermicity.

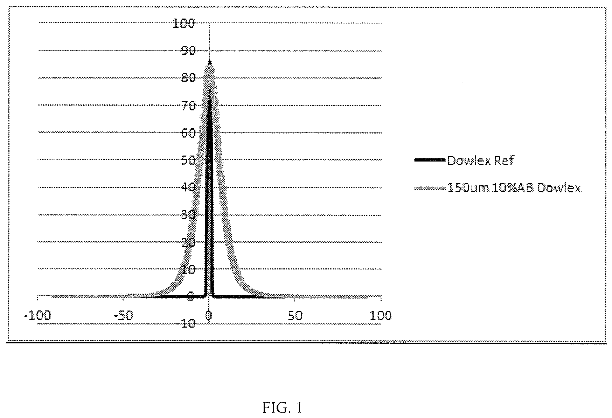

A goniophotometer was used to quantify forward scattering properties of the films containing acrylic beads. The samples used and their properties are shown in Table 3 and the results are shown in Figure 1.

### Table 3. Samples used for Measurement of Forward Scattering Properties

| Sample | Thickness ($\mu$m) | $D_{50}$ | $I_{diff}$ | Haze | Transparency (%) |
|---|---|---|---|---|---|
| Dowlex Ref | 92 | 1.2 | inf | 3.9 | 93.5 |
| 10% Acrylic Beads in Dowlex | 150 | 6.8 | 0.04 | 89.9 | 92.9 |

Figure 1 depicts the intensity of scattered light through films as a function of detector angle. (0° = the detector is directly opposite the light source with plane of film perpendicular to the axis between the source and detector.

Figure 1 shows a much broader scattering for the film containing the acrylic beads. An increase in haze and forward scattering with little decrease in transmittance is beneficial for greenhouse films, as the incoming light is more efficiently scattered throughout the greenhouse.

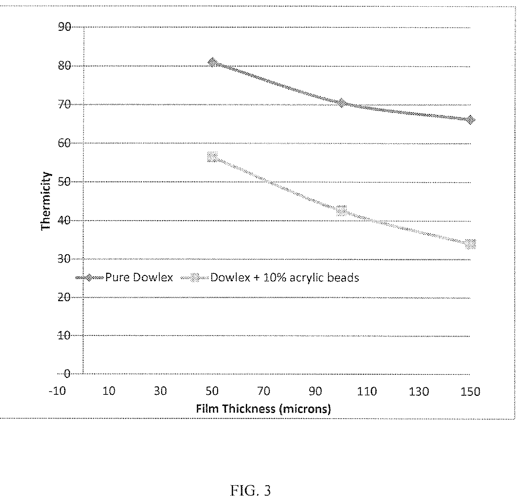

The IR spectra of the films are shown in Figure 3. Significant absorption in the 700-1400 $cm^{-1}$ region is seen, particularly for the film with acrylic beads.

In order to compare the thermicity of films containing acrylic beads with that of films containing the thermicity enhancer EVA (Poly(ethylene-*co*-vinyl acetate)), 10% EVA was compounded in Dowlex and films cast with the following compositions:

Comparative Example D: 90% Dowlex 2045G with 10% EVA (Scientific Polymer Products).Properties of EVA: MI = 7.5g / 10 min, Vinyl acetate content = 14 wt%, d = 0.932

Comparative Example E: 90% Dowlex 2045G with 10% EVA (Dow DXM-337).Properties of EVA: MI = 1.6 - 2.1 g/10min, Vinyl acetate content = 8-11 wt%.

Properties of film containing Dow EVA (DXM-337, 8-11% VA):

- Thickness = 134 microns

- Thermicity = 44.5%

Properties of film containing Commercial EVA (Scientific Polymer Products, 14 wt% VA)

- Thickness = 132 microns

- Thermicity = 41.1%

Using a straight line fitted to the graph in Figure 2, a similar film thickness with 10% acrylic beads would give a thermicity of approximately 37%, which is better than the EVA containing films of equivalent thickness. The reason for this is that acrylic beads, due to their acrylate composition, have a much higher mass fraction of IR absorbing -O-C=O functionalities than EVA.

### Test Methods

Transmittance and haze were measured in accordance with ASTM method D1003.

Thermicity was measured using FTIR spectra of the films. Thermicity is defined as follows:

$$\text{Thermicity} = [A_i/A_0] \times 100$$

$A_i$ is the area integrated under transmittance spectrum between 700 and 1400 $cm^{-1}$
$A_0$ is the area between 700 and 1400 $cm^{-1}$ at the case of 100% transmittance

### Claims

1. A greenhouse film comprising a polymeric composition comprising:

   a) 50 to 99 percent by weight of a continuous polymeric phase comprising a polymer selected from the group consisting of a polyolefin, a polyolefin copolymer, an ethylene or propylene copolymer with an acrylic ester, an ethylene or propylene copolymer with a vinyl acetate, and combinations thereof; and
   b) 1 to 50 percent by weight of polymeric particles having

   i) an average particle diameter of 0.5 to 10 $\mu$m;
   ii) a refractive index from 1.474 to 1.545;
   iii) an average particle hardness from 1.2367E+10 $N/m^2$ to 8.4617E+10 $N/m^2$; and
   iv) at least 60% polymerized acrylic monomer units.

2. The greenhouse film of claim 1, wherein the polyolefin is selected from the group consisting of polypropylene, polyethylene, polybutylene and copolymers and blends thereof.

3. The greenhouse film of any one of the preceding claims, wherein the polymeric particles have a continuous refractive index gradient.

4. The greenhouse film of claim 3 wherein the polymeric particles have a refractive index at the surface from 1.46 to 1.7 and a refractive index at the center from 1.45 to 1.53.

5. The greenhouse film of claim 1 wherein the polymeric particles comprise at least 70 mole % of acrylic, vinyl acetate and styrenic monomer units.

6. The greenhouse film of Claim 1, wherein the greenhouse film is **characterized by** having a thickness in the range of from 25 to 300 $\mu$m, haze in the range of from 50 to 99%, transmittance in the range of from 85 to 99 %, and thermicity in the range of from 60 to 10 %.

7. The greenhouse film of claim 1 wherein the polymeric composition further comprises antioxidants selected from the group consisting of sterically hindered phenols, ultraviolet light stabilizers, hindered amine light stabilizers, and combinations thereof.

8. The greenhouse of claim 1 wherein the polymeric particles are cross-linked.

**Patentansprüche**

1. Eine Gewächshausfolie, beinhaltend eine Polymerzusammensetzung, die Folgendes beinhaltet:

   a) zu 50 bis 99 Gewichtsprozent eine kontinuierliche Polymerphase, beinhaltend ein Polymer, das aus der Gruppe ausgewählt ist, die aus Folgendem besteht: einem Polyolefin, einem Polyolefincopolymer, einem Ethylen- oder Propylencopolymer mit einem Acrylester, einem Ethylen- oder Propylencopolymer mit einem Vinylacetat und Kombinationen davon; und
   b) zu 1 bis 50 Gewichtsprozent Polymerpartikel, die Folgendes aufweisen:

      i) einen durchschnittlichen Partikeldurchmesser von 0,5 bis 10 $\mu$m;
      ii) einen Brechungsindex von 1,474 bis 1,545;
      iii) eine durchschnittliche Partikelhärte von 1,2367E + 10 N/m$^2$ bis 8,4617E + 10 N/m$^2$; und
      iv) zu wenigstens 60 % polymerisierte Acrylmonomereinheiten.

2. Gewächshausfolie gemäß Anspruch 1, wobei das Polyolefin aus der Gruppe ausgewählt ist, die aus Folgendem besteht: Polypropylen, Polyethylen, Polybutylen und Copolymeren und Mischungen davon.

3. Gewächshausfolie gemäß einem der vorhergehenden Ansprüche, wobei die Polymerpartikel einen kontinuierlichen Brechungsindexgradienten aufweisen.

4. Gewächshausfolie gemäß Anspruch 3, wobei die Polymerpartikel einen Brechungsindex an der Oberfläche von 1,46 bis 1,7 und einen Brechungsindex in der Mitte von 1,45 bis 1,53 aufweisen.

5. Gewächshausfolie gemäß Anspruch 1, wobei die Polymerpartikel zu mindestens 70 Mol-% Acryl-, Vinylacetat- und Styrolmonomereinheiten beinhalten.

6. Gewächshausfolie gemäß Anspruch 1, wobei die Gewächshausfolie **dadurch gekennzeichnet ist, dass** sie Folgendes aufweist: eine Dicke im Bereich von 25 bis 300 $\mu$m, eine Trübung im Bereich von 50 bis 99 %, Transmission im Bereich von 85 bis 99 % und Thermizität im Bereich von 60 bis 10 %.

7. Gewächshausfolie gemäß Anspruch 1, wobei die Polymerzusammensetzung ferner Antioxidationsmittel beinhaltet, die aus der Gruppe ausgewählt sind, die aus Folgendem besteht: sterisch gehinderten Phenolen, Ultraviolettlichtstabilisatoren, HALS (Hindered Amine Light Stabilizers) und Kombinationen davon.

8. Gewächshausfolie gemäß Anspruch 1, wobei die Polymerpartikel vernetzt sind.

**EP 3 157 996 B1**

**Revendications**

1. Un film à effet de serre comprenant une composition polymère comprenant :

   a) de 50 à 99 pour cent en poids d'une phase polymère continue comprenant un polymère sélectionné dans le groupe constitué d'une polyoléfine, d'un copolymère polyoléfine, d'un copolymère d'éthylène ou de propylène avec un ester acrylique, d'un copolymère d'éthylène ou de propylène avec un acétate de vinyle, et de combinaisons de ceux-ci ; et
   b) de 1 à 50 pour cent en poids de particules polymères ayant

   i) un diamètre de particule moyen de 0,5 à 10 $\mu$m ;
   ii) un indice de réfraction allant de 1,474 à 1,545 ;
   iii) une dureté de particule moyenne allant de 1,2367E + 10 N/m$^2$ à 8,4617E + 10 N/m$^2$ ; et
   iv) au moins 60 % d'unités monomères acryliques polymérisées.

2. Le film à effet de serre de la revendication 1, dans lequel la polyoléfine est sélectionnée dans le groupe constitué de polypropylène, de polyéthylène, de polybutylène et de copolymères et mélanges homogènes de ceux-ci.

3. Le film à effet de serre de n'importe laquelle des revendications précédentes, dans lequel les particules polymères ont un gradient d'indice de réfraction continu.

4. Le film à effet de serre de la revendication 3 dans lequel les particules polymères ont un indice de réfraction au niveau de la surface allant de 1,46 à 1,7 et un indice de réfraction au niveau du centre allant de 1,45 à 1,53.

5. Le film à effet de serre de la revendication 1 dans lequel les particules polymères comprennent au moins 70 % en moles d'unités monomères acrylique, d'acétate de vinyle et styrénique.

6. Le film à effet de serre de la revendication 1, le film à effet de serre étant **caractérisé par** le fait d'avoir une épaisseur comprise dans la gamme allant de 25 à 300 $\mu$m, un trouble compris dans la gamme allant de 50 à 99 %, un facteur de transmission compris dans la gamme allant de 85 à 99 %, et une thermicité comprise dans la gamme allant de 60 à 10 %.

7. Le film à effet de serre de la revendication 1 dans lequel la composition polymère comprend en outre des antioxydants sélectionnés dans le groupe constitué de phénols stériquement encombrés, de stabilisants à lumière ultraviolette, de stabilisants à la lumière de type amine encombrée, et de combinaisons de ceux-ci.

8. Le film à effet de serre de la revendication 1 dans lequel les particules polymères sont réticulées.

FIG. 1

FIG. 2

FIG. 3

**EP 3 157 996 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090097123 A